# EUROPEAN PATENT APPLICATION

(11) **EP 2 251 723 A2**
(43) Date of publication of application: **17.11.2010**
(21) Application number: 10162120.9
(22) Date of filing: 06.05.2010
(51) Int. Cl.: G02B 6/13

(54) **Method for manufacturing optical waveguide**

(30) Priority: 12.05.2009 JP 2009115090
(71) Applicant: Nitto Denko Corporation, Ibaraki-shi Osaka 567-8680 (JP)
(72) Inventor: Naitou, Ryusuke, Osaka 567-8680 (JP)
(74) Representative: HOFFMANN EITLE

(57) **Abstract**

A method for manufacturing an optical waveguide (10) includes the steps of: A) forming a liquid-state resin mass (16) by adding dropwise a liquid-state resin (14) on an under-cladding layer (11); B) forming a liquid-state resin layer (18) to cover cores (12) by pressing a mold (17) on the liquid-state resin mass (16) and applying the liquid-state resin (14) to be expanded on the under-cladding layer (11); and C)curing the liquid-state resin layer (18) and then releasing the mold (17), wherein the liquid-state resin (14) added dropwise has a viscosity of 500 to 2,000 mPa·s and the rate at which the liquid-state resin (14) is applied to be expanded is 10 to 50 mm/s.

## Description

### TECHNICAL FIELD OF THE INVENTION

The present invention relates to a method for manufacturing an optical waveguide with a high optical transmission efficiency.

### BACKGOUND ART

Conventionally, a method for manufacturing an optical waveguide by applying a curable liquid-state resin on cores and curing the liquid-state resin by ultraviolet rays or heat to form an over-cladding layer has been known (see Japanese Unexamined Patent Application Publication No. 2002-31732).

In such a conventional manufacturing method, a liquid-state resin with a low viscosity is used when the over-cladding layer is thin and a liquid-state resin with a high viscosity is used when the over-cladding layer is thick. The phrase "the over-cladding layer is thin" typically means that the over-cladding layer has a thickness of less than 100 µm. And the phrase "the over-cladding layer is thick" typically means that the over-cladding layer has a maximum thickness (a thickness of a portion with the greatest thickness) of not less than 500 µm.

In conventional manufacturing methods, while productivity is good when an over-cladding layer is thin, productivity is bad when the over-cladding layer is thick. This is because a liquid-state resin with a high viscosity is used when the over-cladding layer is thick, so that bubbles are adhered to the periphery of cores, resulting in lower optical transmission efficiency of an optical waveguide.

In conventional manufacturing methods, it is also possible to obtain an over-cladding layer having few bubbles by using a liquid-state resin with a low viscosity. However, in that case, it is difficult to obtain an over-cladding layer with a great thickness.

Conventionally, methods for manufacturing an optical waveguide by applying a curable liquid-state resin on cores and curing the liquid-state resin by ultraviolet rays or heat to form an over-cladding layer have been known.

In such conventional methods, productivity is good when the over-cladding layer is thin. However, a liquid-state resin with a high viscosity is used when the over-cladding layer is thick, so that it is difficult to obtain a good quality-over-cladding layer because bubbles tend to be easily adhered to the periphery of the cores.

### SUMMARY OF THE INVENTION

According to the present invention, there is provided a method for manufacturing an optical waveguide which comprises an under-cladding layer, cores formed on the under-cladding layer, and an over-cladding layer composed of a liquid-state curable resin layer having a maximum thickness of not less than 500 µm formed on the under-cladding layer so as to cover the cores. The method for manufacturing an optical waveguide according to the present invention includes the steps of: A)forming a liquid-state resin mass by adding dropwise a curable liquid-state resin that may form the over-cladding layer on the under-cladding layer; B)forming a liquid-state resin layer to cover the cores by pressing a mold on the liquid-state resin mass and applying the liquid-state resin to be expanded on the under-cladding layer; and C)curing the liquid-state resin layer and then releasing the mold. In the manufacturing method according to the present invention, the liquid-state resin added dropwise has a viscosity of 500 to 2,000 mPa·s in step A) and the rate at which the liquid-state resin is applied to be expanded is 10 to 50 mm/s in step B).
In preferred embodiments of the method for manufacturing an optical waveguide according to the present invention, the curable liquid-state resin that may form an over-cladding layer is an ultraviolet rays resin.

As a result of careful study of the inventor of the present invention to solve the aforementioned problems, he has found that when the viscosity of the liquid-state resin that falls in drops and the rate at which the liquid-state resin is applied to be expanded are respectively in a specific range, it is possible to easily remove bubbles adhered to the periphery of the cores, which leads to obtain an optical waveguide with a high optical transmission efficiency.

The liquid-state resin that falls in drops preferably has a viscosity of 500 to 2,000 mPa·s to set the maximum thickness of the over-cladding layer at not less than 500 µm. The maximum thickness of the over-cladding layer may not reach 500 µm when the liquid-state resin has a viscosity of lower than 500 mPa·s. It may be difficult to remove bubbles adhered to the periphery of the cores when the liquid-state resin has a viscosity of over 2,000 mPa·s.

To remove bubbles adhered to the periphery of the cores, the rate at which the liquid-state resin is applied to be expanded is preferably 10 to 50 mm/s when the liquid-state resin has a viscosity in the aforementioned range. The rate at which the liquid-state resin is applied to be expanded is faster than the rate at which the liquid-state resin is naturally applied to be expanded. The rate at which the liquid-state resin is applied to be expanded in this range can be obtained by pressing the mold on the liquid-state resin at an appropriate pressure.

It is possible to remove bubbles before the mold is closed by setting the viscosity of the liquid-state resin at 500 to 2,000 mPa·s and the rate at which the liquid-state resin is applied to be expanded at 10 to 50 mm/s. This enables to obtain an optical waveguide with a high optical transmission efficiency.

### ADVANTAGE OF THE INVENTION

The manufacturing method of the present invention makes it possible to obtain an over-cladding layer without bubbles adhered to the cores and having a maximum thickness of not less than 500 µm. Therefore, an optical waveguide according to the present invention typically has optical transmission efficiency of cores higher than that of conventional optical waveguides by 60% or higher.
For a full understanding of the present invention, reference should be made to the following detailed description of the preferred embodiments of the invention as illustrated in the accompanying drawings.

### BRIEF DESCRIPTION OF THE DRAWINGS

FIGs. 1 (a) to 1 (f) are schematic views that respectively show a process for manufacturing an optical waveguide according to the present invention;
FIG. 2 is a schematic view of an optical waveguide manufactured by the manufacturing method according to the present invention; and
FIG. 3 is a schematic view of a coordinate input device using an optical waveguide manufactured by the manufacturing method according to the present invention.

### DESCRIPTION OF THE PREFERRED EMBODIMENTS

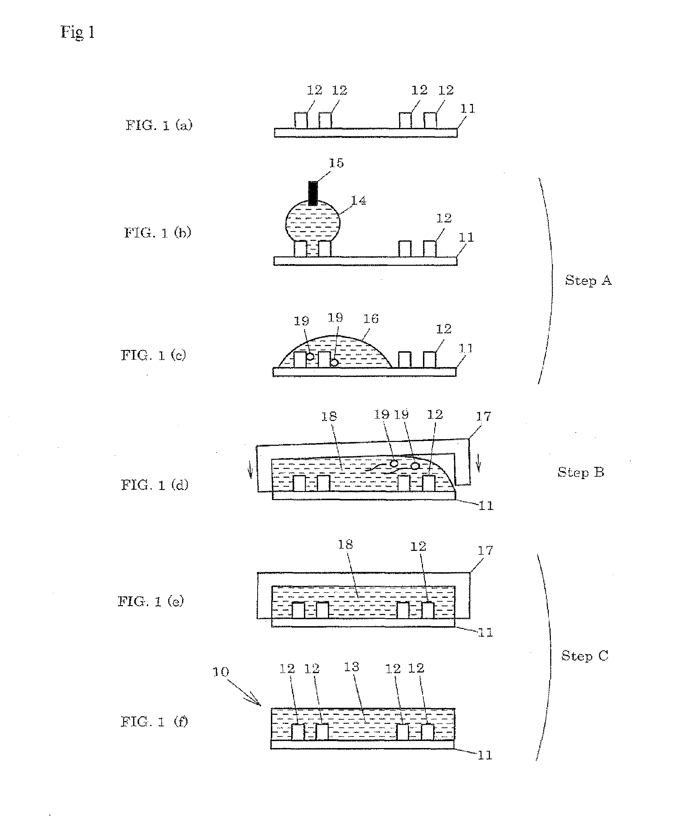

The preferred embodiments of the present invention will now be described with reference to FIGs. 1 to 3 of the drawings. Identical elements in the various figures are designated with the same reference numerals.

### [Method for Manufacturing Optical Waveguide of the Invention]

The present invention provides a method for manufacturing an optical waveguide which comprises: (a) an under-cladding layer; (b) cores formed on the under-cladding layer; and (c) an over-cladding layer composed of a resin curable layer with a maximum thickness of not less than 500 µm formed on the under-cladding layer so as to cover the cores.

The method for manufacturing an optical waveguide of the present invention may include steps A to C as described below in order. Any steps may be included between each step.

The phrase "the maximum thickness of the over-cladding layer" herein means the thickness of the over-cladding layer when the over-cladding layer has a uniform thickness. When the thickness of the over-cladding layer differs depending on the place, the thickness means the thickness of the portion having a maximum thickness. Referring to FIGs. 1 (a) through 1 (f), each step will now be described later.

### [Step A]

FIG. 1 (a) shows an under-cladding layer 11 and cores 12 immediate before carrying out the step A.

As shown in FIGs. 1 (b) and 1 (c), the step A in the manufacturing method of the present invention is forming a liquid-state resin mass by adding dropwise a curable liquid-state resin 14 that may form an over-cladding layer 13 on the under-cladding layer 11 with a dropping nozzle 15.

The under-cladding layer 11 to be used in the present invention is formed from any material having a refractive index lower than that of the cores 12. The under-cladding layer 11 may be formed from a material identical to the material of the over-cladding layer 13 described later. The under-cladding layer 11 typically has a thickness of 10 to 100 µm.

Typically, a liquid-state resin which is changed to be hardly dissolved and fused or to be poorly dissolved and fused by energy, such as catalysis, heating, and optical irradiation or the like is used as the curable liquid-state resin 14 for forming the over-cladding layer 13.

The liquid-state resin 14 is preferably an ultraviolet rays resin. The ultraviolet rays resin generally contains a photo-polymerizable prepolymer that is polymerized by a photochemical function, and in addition to this, may also contain a reactive diluent, a photopolymerization initiator, a solvent, a leveling agent and the like.

The liquid-state resin 14 preferably has a viscosity of 500 to 2,000 mPa·s because the maximum thickness of the over-cladding layer 13 is not less than 500 µm. The liquid-state resin 14 more preferably has a viscosity of 800 to 1,500 mPa·s. It is possible to adjust the viscosity of the liquid-state resin 14 appropriately, for example, by diluting the liquid-state resin 14 with a solvent.

For example, the liquid-state resin 14 can be added dropwise using the dropping nozzle 15. The amount of the liquid-state resin 14 to be added dropwise can be set appropriately in accordance with the area of an optical waveguide 10. The shape of the liquid-state resin mass 16 obtained by adding the liquid-state resin 14 dropwise is naturally formed in accordance with the viscosity and thixotropy of the liquid-state resin. A plural number of the liquid-state resin masses 16 may be provided on the under-cladding layer 11.

### [Step B]

As shown in FIG. 1 (d), the Step B of the present invention is forming a liquid-state resin layer 18 for covering the cores 12 by pressing a mold 17 on the liquid-state resin mass 16 obtained by the step A and applying the liquid-state resin mass 16 on the under-cladding layer 11 to be expanded. In the step B, the mold 17 is pressed in such a manner that the liquid-state resin mass 16 may be applied to be expanded at the rate of 10 to 50 mm/s to effectively remove bubbles 19 adhered to the periphery of the cores 12. The rate at which the liquid-state resin mass 16 is applied to be expanded is preferably 20 to 40 mm/s.

The rate at which the liquid-state resin mass 16 is applied to be expanded may be in the aforementioned range in a partial process by the time of forming the liquid-state resin layer 18 after the liquid-state resin 14 is added dropwise on the under-cladding layer 11. This is because it is possible to remove the bubbles 19 in the mean time. The rate at which the liquid-state resin mass 16 is applied to be expanded can be controlled by appropriately adjusting the viscosity of the liquid-state resin mass 16 and the pressing rate of the mold 17.

The cores 12 are formed by any material having a refractive index higher than the under-cladding layer 11 and the over-cladding layer 13 and high transparency at the wavelength of light that propagates. As a material to be used for forming the cores 12, an ultraviolet ray-curable resin having a refractive index higher than the under-cladding layer 11 and the over-cladding layer 13 is preferably used.

The maximum refractive index difference among the cores 12, the under-cladding layer 11 and the over-cladding layer 13 is preferably 0.02 to 0.2. The width of the cores 12 is typically 10 to 500 µm. And the height of the cores 12 is typically 10 to 100 µm.

Examples of a material to be used for forming the mold 17 include quartz, nickel synthetic metal, and glassy carbon. The mold 17 may have a through hole to discharge the bubbles 19. Further, the inner surface of the mold 17 may be treated by a releasing agent. The conditions for pressing the mold 17 is appropriately determined according to the kind of the liquid-state resin or the viscosity of the liquid-state resin.

The liquid-state resin layer 18 is formed on the under-cladding layer 11 so as to cover the cores 12 to form the over-cladding layer 13 after being cured.

### [Step C]

As shown in FIGs. 1 (e) and 1 (f), the step C in the manufacturing method of the present invention is releasing the mold 17 after curing the liquid-state resin layer 18 obtained by the step B.

When an ultraviolet ray-curable resin is used as the liquid-state resin 14, the liquid-state resin layer 18 is cured by the irradiation with ultraviolet rays. Ultraviolet rays are preferably irradiated from the surface (outside) of the mold 17. The mold 17 is transparent toward light irradiated. The dose of the ultraviolet rays is preferably 100 to 8,000 mJ/cm².

The mold 17 is released in the state that the shape of the liquid-state resin layer 18 is maintained. The liquid-state resin layer 18 may be in a complete cured state or a partially cured state when the mold 17 is released. When the liquid-state resin layer 18 is in a partially cured state, the liquid-state resin layer 18 is additionally cured after the release of the mold 17.

### [Optical waveguide]

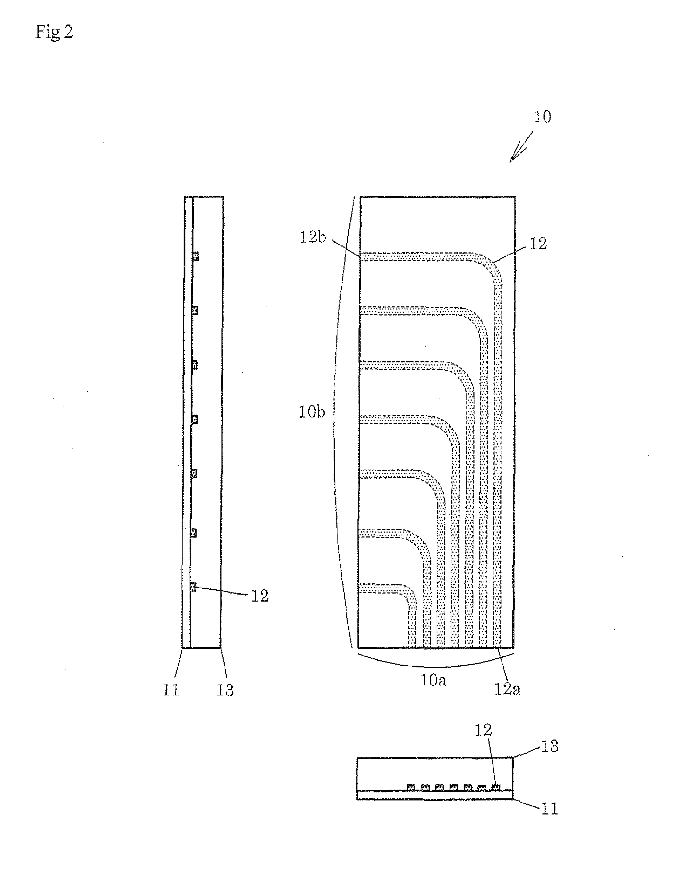

As shown in FIG. 2, the optical waveguide 10 being an embodiment in the manufacturing method of the present invention comprises: the under-cladding layer 11; the cores 12 formed on the under-cladding layer 11; and the over-cladding layer 13 to cover the cores having a maximum thickness of not less than 500 µm.

For example, the optical waveguide 10 is capable of receiving light beams from ends 12a of the cores 12 located on a short side surface 10a and transmitting light to ends 12b of the cores 12 located on a long side surface 10b.

The optical waveguide 10 may be manufactured by any method, such as a dry etching method, a transfer method, an exposing/developing method, a photo-bleaching method and the like.

Although the applications of the optical waveguide 10 produced by the manufacturing method of the present invention are not particularly limited, the optical waveguide is preferably used for, for example, an optical wiring plate, an optical connector, a substrate with optical-electric devices mixedly mounted, an optical touch panel and the like.

### EXAMPLES

### [Example 1]

### [Preparation for liquid-state resin for cladding-layer-forming]

(Component A)Epoxy-based ultraviolet ray-curable resin having an alicyclic skeleton (EP4080E, manufactured by Adeka Corporation) 100 parts by weight
(Component B)Photo-acid generator (CPI-200K, manufactured by SAN-APRO Ltd.) 2 parts by weight

These components were mixed to prepare a liquid-state resin for cladding-layer-forming.

### [Preparation for liquid-state resin for core forming]

(Component C)Epoxy-based ultraviolet ray-curable resin containing a fluorene skeleton (OGSOL EG, manufactured by Osaka Gas Chemicals Co., Ltd.) 40 parts by weight
(Component D)Epoxy-based ultraviolet ray-curable resin containing a fluorene skeleton (EX-1040, manufactured by Nagase Chemtex Corporation) 30 parts by weight
(Component E)1,3,3-tris(4-(2-(3-oxycetanyl))butoxyphenyl) butane (synthesized in accordance with Example 2 in JP 2007-070320 A) 30 parts by weight
   1 part by weight of the component B and 41 parts by weight of ethyl lactate were mixed so that a liquid-state resin for core forming was prepared.

### [Production of Optical waveguide]

A liquid-state resin for cladding-layer-forming was applied to the surface of a polyethylene naphthalate film having a thickness of 188 µm, and after being irradiated with 1,000 mJ/cm² of ultraviolet rays, this was subjected to a heating treatment at 80°C for 5 minutes so that an under-cladding layer having a thickness of 20 µm was formed. The under-cladding layer had a refractive index of 1.510 at a wavelength of 830 nm.

The liquid-state resin for core forming was applied to the surface of the under-cladding layer, and this was subjected to a heating treatment at 100°C for 5 minutes so that a core layer was formed. The core layer was covered with a photomask and this was irradiated with 2,500 mJ/cm² of ultraviolet rays, and further subjected to a heating treatment at 100°C for 10 minutes. The gap between the core layer and the photomask was 100 µm.

Unirradiated portions with ultraviolet rays of the core layer were dissolved and removed by a γ-butyrolactone aqueous solution, and this was subjected to a heating treatment at 120°C for 5 minutes so that a plurality of cores having a core width of 20 µm and a core height of 50 µm were pattern-formed. The plurality of cores respectively had a refractive index of 1.592 at a wavelength of 830 nm.

The liquid-state resin for cladding-layer-forming having a viscosity of 1,000 mPa·s fell in drops in a manner so as to cover the whole cores so that a liquid-state resin mass was formed. Next, a mold was pressed onto the liquid-state resin mass and the liquid-state resin was expanded in such a manner that the rate at which the liquid-state resin was applied to be expanded might be 30 mm/s to form a liquid-state resin layer having a thickness of 500 µm.

Ultraviolet rays of 6,000 mJ/cm² were irradiated from the surface of the mold, and then subjected to a heating treatment at 80°C for 2 minutes so that the liquid-state resin layer might be cured.

Thereafter, the mold was separated therefrom to form an over-cladding layer having a thickness of 500 µm. The refractive index of the over-cladding layer at a wavelength of 830 nm was 1.510.

### [Comparative Example 1]

An optical waveguide was manufactured in the same manner as in Example 1 except for forming a liquid-state resin layer by the application of a liquid-state resin using a doctor blade.

### [Comparative Example 2]

An optical waveguide was manufactured in the same manner as in Example 1 except that the viscosity of the liquid-state resin was changed to 30 mPa·s. The viscosity of the liquid-state resin was adjusted by mixing ethyl lactate as a diluent.

### [Evaluation]

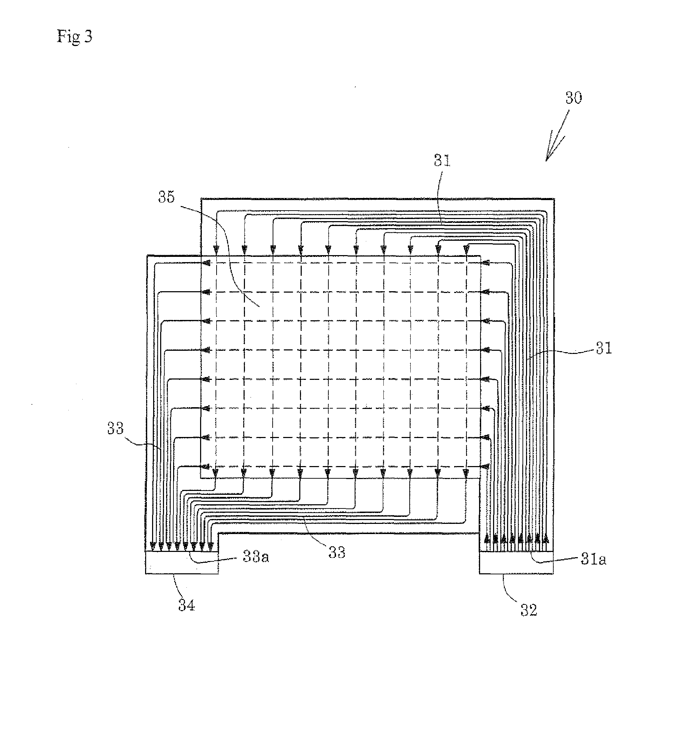

Two pieces of each of optical waveguides manufactured in Example 1 and Comparative Examples 1 and 2 were prepared. As shown in FIG. 3, a light-emitting element 32 for emitting infrared light having a wavelength of 850 nm was optically coupled to an end 31a of one of the optical waveguides 31. The light-emitting element 32 was VCSEL manufactured by Optowell Co., Ltd.

A light-receiving element 34 was optically coupled to an end 33a of the other optical waveguide 33. The light-receiving element 34 was a CMOS linear censor array manufactured by TAOS Co., Ltd.

The respective optical waveguides 31 and 33 were disposed so as to face each other with a coordinate input region 35 interposed therebetween so that a coordinate input device 30 having 3 inches in diagonal length as shown in FIG. 3 was manufactured.

Table 1 shows light intensity indicated by percentage received by the light-receiving element 34 when light having an intensity of 5 mW was outputted from the light-emitting element 32. As can be seen from Table 1, the optical waveguide of Example 1 had a transmission efficiency higher than that of the comparative examples.

**Table 1**

| | Method | Viscosity of liquid-state resin mPa·s | Rate of application to be expanded mm/s | Optical transmission efficiency % |
|---|---|---|---|---|
| Example 1 | Pressing | 1,000 | 30 | 0.8 |
| Comparative Example 1 | Applying | 1,000 | 150 | 0.5 |
| Comparative Example 2 | Pressing | 30 | 30 | *1 |

| | | | | |
|---|---|---|---|---|
| *1 Measurement was not carried out because the thickness of the cladding layer was less than 500 µm. | | | | |

### [Measuring Method]

### [Viscosity of liquid-state resin]

By using a viscometer (HAAKKE Rheo Stress 600, manufactured by Thermo HAAKE Co., Ltd.), the viscosity of the liquid-state resin was measured at a temperature of 25°C.

### [Rate of application of liquid-state resin to be expanded]

Time that has taken for a liquid-state resin for forming an over-cladding layer on an under-cladding layer with a predetermined length was manually measured with a stop watch to calculate the rate at which the liquid-state resin was applied to be expanded from the casting distance and time.

### [Industrial applicability]

Although the applications of the optical waveguide produced by the manufacturing method of the present invention are not particularly limited, the optical waveguide is preferably used for, for example, an optical wiring plate, an optical connector, a substrate with optical-electric devices mixedly mounted, an optical touch panel and the like.

## Claims

1. A method for manufacturing an optical waveguide (10) comprising: an under-cladding layer (11); cores (12) formed on the under-cladding layer (11); and an over-cladding layer (13) composed of a liquid-state curable resin layer (18) having a maximum thickness of not less than 500 µm formed on the under-cladding layer (11) so as to cover the cores (12), the method comprising the steps of:
A) forming a liquid-state resin mass (16) by adding dropwise a curable liquid-state resin (14) that forms the over-cladding layer (13) on the under-cladding layer (11);
B) forming a liquid-state resin layer (18) to cover the cores (12) by pressing a mold (17) on the liquid-state resin mass (16) and applying the liquid-state resin (14) to be expanded on the under-cladding layer (11); and
C)curing the liquid-state resin layer (18) and then releasing the mold (17),
wherein the liquid-state resin (14) added dropwise has a viscosity of 500 to 2,000 mPa·s in step A) and
the rate at which the liquid-state resin (14) is applied to be expanded is 10 to 50 mm/s in step B).

2. The method according to claim 1, wherein the curable liquid-state resin (14) capable of forming the over-cladding layer (13) is an ultraviolet ray-curable resin.
